# EUROPEAN PATENT APPLICATION

(11) **EP 3 637 349 A1**
(43) Date of publication of application: **15.04.2020**
(21) Application number: 18813800.2
(22) Date of filing: 28.03.2018
(51) Int. Cl.: G06Q 30/02

(54) **METHOD, DEVICE, AND COMPUTER PROGRAM FOR PROVIDING IMAGE-BASED ADVERTISEMENT**

(30) Priority: 08.06.2017 KR 20170071351
(71) Applicant: Odd Concepts Inc., Seoul 06133 (KR)
(72) Inventor: KIM, Jung Tae, Seoul 04424 (KR)
(74) Representative: Mathys & Squire
(86) International application number: PCT/KR2018/003656
(87) International publication number: WO 2018/225939

(57) **Abstract**

The present invention relates to a method of displaying an image-based customized advertisement on a user device. The method includes: specifying and displaying a searchable object when there is the searchable object among images included in a displayed page; transmitting an image query including the object to a service server when receiving a user's search request for a specified object and activating a predetermined advertisement area; and displaying an advertisement image included in the advertisement information in the advertisement area when at least one piece of advertisement information is received from the service server.

## Description

### [Technical Field]

The present invention relates to a method and apparatus for providing an advertisement. More specifically, the present invention relates to an advertisement platform system that provides a customized advertisement based on an image displayed on a user device.

### [Background Art]

With the rapid development of computer processing technology, the internet-based advertisement system has recently been developed to reflect user attributes on advertisements and distribute the advertisements. The advertisement content is not delivered in one direction from an advertiser to a user, but advertisement content for an item of interest is provided by inferring the user's interest area.

For example, a retargeting advertisement is an approach of estimating a user's item of interest based on a user's purchase history, search history, and the like, and providing an advertisement based thereon. When the user purchased corn and milk online before, the user may be provided with advertisements for corn and milk, or if the user searched for sunglasses before, the user may be provided with advertisements related to sunglasses.

However, such an advertisement does not consider other content at the time of exposure of the advertisement. When an advertisement for corn and milk is displayed to a user who previously purchased corn and milk is displayed in a situation where the user is reading content in a fashion magazine, the advertising effect for the user will be insignificant. That is, as a result, advertisements irrelevant to the interest of user at the time of providing the advertisement may be provided.

On the other hand, displaying irrelevant advertisements while a user is browsing a website of a particular company may adversely affect the brand image of the company. A website operator can make a contract with an advertiser and earn profits by providing an advertisement area on his/her website, and the advertiser may be concerned that advertisements for items that are not related to his/her content are viewed in the advertisement area.

For example, when advertisements for corn and milk are displayed on a fashion magazine's website along with fashion-related content, it could adversely affect the fashion magazine's brand image. Therefore, a company that considers brand image as important does not provide an advertisement area on a website, and may cause a problem that an online advertisement medium is restricted.

### [Summary of Invention]

### [Technical Problem]

An object of the present invention is to provide a filtering method for determining an advertisement item based on an image search displayed on a user device, and for increasing an accuracy of an image search result value.

It is further an object of the present invention to provide a user interface for setting an efficient advertisement area in a limited display of a device.

### [Solution to Problem]

According to an embodiment of the present invention, a method of displaying an image-based customized advertisement on a user device includes: specifying and displaying a searchable object when there is the searchable object among images included in a displayed page; when receiving a user's search request for a specified object, transmitting an image query including the object to a service server and activating a predetermined advertisement area; and when at least one piece of advertisement information is received from the service server, displaying an advertisement image included in the advertisement information in the advertisement area.

### [Advantageous Effects of Invention]

According to the present invention, it is possible to determine the advertisement item based on the image search displayed on the user device, thereby improving the accuracy of the image search result value.

Furthermore, according to the present invention, it is possible to set the advertisement area efficiently in the limited display of the device.

### [Brief Description of Drawings]

FIG. 1 is a flowchart illustrating an advertisement platform system for providing an image-based customized advertisement according to an embodiment of the present invention.
FIG. 2 is a flowchart illustrating a process of constructing a database of advertisement target product information and product description image according to an embodiment of the present invention.
FIG. 3 is a flowchart illustrating a process of determining an advertisement item based on a query image.
FIG. 5 illustrates an example of a user interface displaying an advertisement area according to an embodiment of the present invention.
FIG. 6 is another example of a user interface displaying an advertisement area according to an embodiment of the present invention.

### [Description of Embodiments]

It is apparent that the present invention is not limited to the description of the embodiments described below, and various modifications may be made without departing from the technical scope of the present invention. In describing embodiments, descriptions of technical contents which are widely known in the technical field to which the present invention belongs and are not directly related to the technical gist of the present invention will be omitted.

In the following description, it is assumed that the user device on which product information is displayed is a mobile device, but the present invention is not limited thereto. That is, in the present invention, the user device should be understood as a concept including all types of electronic devices capable of requesting a search and displaying advertisement information such as a desktop, a smartphone, a tablet PC, and the like.

It should also be noted that the concept of products herein is not limited to tangible products. In other words, the product is to be understood herein as a concept that includes intangible services, which are sellable, as well as tangible products.

As used herein, the term "displayed page in an electronic device" can be understood herein as a concept that includes a screen loaded on an electronic device so as to be immediately displayed on a screen as the user scrolls and/or content within the screen. For example, an entire execution screen of an application extended in a horizontal or vertical direction and displayed according to a user's scroll on the display of a mobile device may be included in the concept of the page, and the screen being camera-rolled may also be included in the concept of the page.

On the other hand, the same components in the accompanying drawings are represented by the same reference numerals. In the accompanying drawings, some components may be exaggerated, omitted, or schematically illustrated. This is to clarify the gist of the present invention by omitting unnecessary description that is not related to the gist of the present invention.

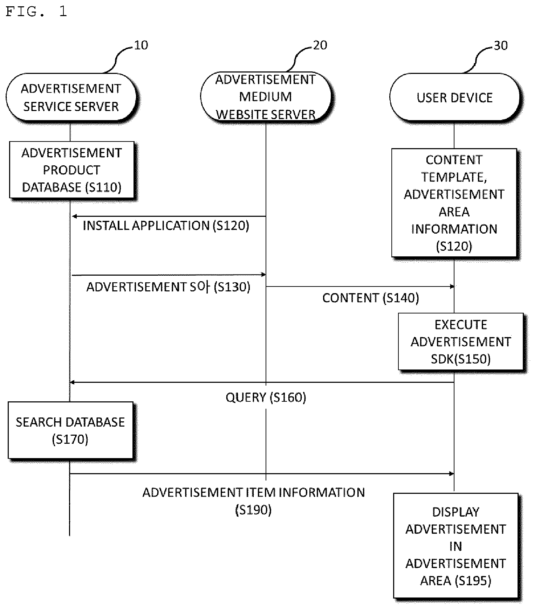

FIG. 1 is a flowchart for describing a platform system for providing an image-based customized advertisement according to an embodiment of the present invention.

An advertisement platform according to an embodiment of the present invention is characterized in that the advertisement platform selects and advertises items similar to an image through which the user is browsing by using a device. For example, if a user is looking at a picture of a checkered shirt, the user is provided with an advertisement for a similar checkered shirt.

According to this, a high advertisement effect may be expected since real-time advertisement of the item of interest to the user at that time is possible. In other words, the user may be provided with advertisements for products of interest in real time, and the advertiser may expect high advertisement revenue. Furthermore, since the website providing the advertisement area only posts advertisements related to its content, it is possible to reduce the risk of deterioration in the brand image due to provision of the advertisement area.

To this end, in step 110, the advertisement service server 10 according to the embodiment of the present invention may construct a product database for advertisement. For example, the advertisement service server may collect information about a product requested for an advertisement from an advertiser, and construct a database including a product image.

The advertisement service server according to an embodiment of the present invention may determine an advertisement item based on similarity with a query image. Therefore, a product image database may be constructed for fast and efficient image search, and an image database may be constructed except for images that may act as noise in image search, especially to reduce a matching failure rate.

For example, when a product to be advertised is a hat and a product description image includes a hat and a women's top, a response for the hat product may be provided in an image query for the women's top. In this case, an advertisement is provided to the user looking at content related to the women's top in the form of an image including a hat and the women's top, and the user who trusts that the advertisement is for the women's top identifies that what is actually being sold is the hat through the advertisement, leading to a decrease in the reliability of the customized advertisement platform.

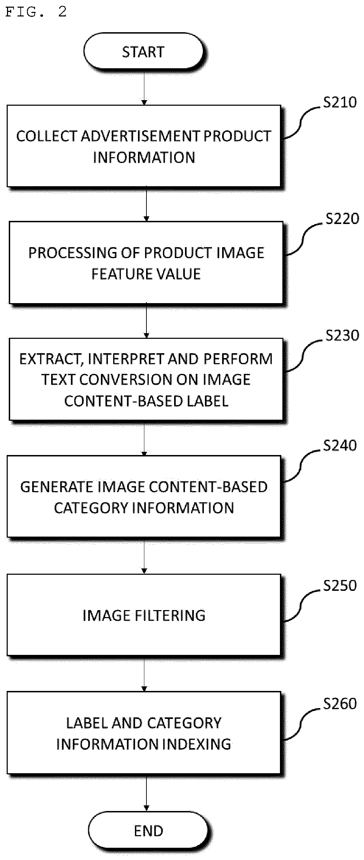

A detailed description of constructing a database of advertisement target product information and product images and filtering the product images in the advertisement service server according to an embodiment of the present invention will be described later with reference to FIG. 2.

FIG. 2 is a flowchart illustrating a process of constructing a database of advertisement target product information and product description image according to an embodiment of the present invention.

In step 210 of FIG. 2, an advertisement service server may collect advertisement target product information.

In this case, the product may be a product for which an advertisement company receives an advertisement request, an online store requested for advertisement, or a product that is sold in the online store. For example, the service server may include a crawler, a parser, and an indexer to collect web documents of an advertiser's online store, and access product images and text information such as product names, and prices, included in the web documents.

For example, the crawler may collect a list of web addresses of an advertiser's online stores, identify websites and track links to transfer data related to product information to the service server. In this case, the parser may extract product information such as product images, product prices, and product names included in the page by interpreting the web documents collected during the crawling process, and the indexer may index relevant locations and meaning.

Meanwhile, although the advertisement service server according to the embodiment of the present invention may collect and index the product information from the websites of the advertiser's online stores, the advertisement service server may receive product information with a predetermined format from the advertiser.

In step 220, the service server may process the product images of the advertiser. The reason for this is to determine advertisement items based on similarity between the product images without depending on text information such as a brand name or a sales category.

As described above, according to the embodiment of the present invention, the advertisement item may be determined based on the similarity of the product images, but the present invention is not limited thereto. In other words, depending on the implementations, a product image as well as a product name or a sales category may be used as a single or auxiliary query. For this purpose, the service server may construct a database by indexing text information such as a product name and a product category in addition to an image of an advertisement target product.

Further, the service server may extract the features of product images and index feature information of the images for the efficiency of search.

More specifically, the service server may detect feature regions of the product images (interest point detection). The feature region refers to a main region for extracting a descriptor of a feature of an image, that is, a feature descriptor, for determining whether the images are identical or similar to each other.

According to an embodiment of the present invention, the feature region may be a contour that the image includes, a corner among the contour, a blob that is separated from the surrounding area, an area that is invariant or covariant according to the deformation of the image, a pole point with darker or lighter features than an ambient brightness, or a patch (piece) or a whole image of an image.

Furthermore, the service server may extract feature descriptors from feature regions. The feature descriptor is a representation of the features of an image as a vector value.

According to an embodiment of the present invention, the feature descriptor may be calculated using the position of the feature region for a corresponding image, or the brightness, color, sharpness, gradient, scale, or pattern information of the feature region. For example, the feature descriptor may be calculated by converting the brightness value, the change value or the distribution value of the brightness of the feature region into a vector.

Meanwhile, according to an embodiment of the present invention, the feature descriptor for the image may be expressed by not only a local descriptor based on the feature region, but also a global descriptor, a frequency descriptor, a binary descriptor, or a neural network descriptor.

More specifically, the feature descriptor may include a global descriptor that converts and extracts the brightness, color, sharpness, gradient, scale, pattern information, or the like of an entire image, each of regions into which the image is divided by an arbitrary reference, or each feature region into a vector value.

For example, the feature descriptor may include a frequency descriptor that converts and extracts the number of times a specific descriptor is included in the image, the number of times a global feature such as generally-defined color palette is included in the image, or the like into a vector value, a binary descriptor that extracts whether each descriptor is included in the image or whether the size of each of elements constituting a descriptor is larger or smaller than a specific value in units of bits and converts it to an integer type, and a neural network descriptor that extracts image information used for classification or learning at a layer of neural network.

Furthermore, according to an embodiment of the present invention, the feature information vector extracted from the product image may be converted into a low-dimensional vector. For example, the feature information extracted through the artificial neural network corresponds to high-dimensional vector information of 40000-dimensions, and it is appropriate to convert the feature information into a low-dimensional vector in an appropriate range in consideration of the resources required for the search.

The conversion of the feature information vector may use an algorithm such as PCA, and the feature information converted into a low-dimensional vector may be indexed into a corresponding product image.

Furthermore, the service server according to the embodiment of the present invention may extract a label for the meaning of the image by applying a machine learning approach based on the processed product description image. The label may be expressed as an abstracted value, but may be expressed in text form by interpreting the abstracted value (step 230).

More specifically, according to a first embodiment of the present invention, the service server may define a label in advance, generate a neural network model that learns the characteristics of images corresponding to the label, classify an object in the product image, and extract the label of a corresponding object. In this case, the service server may assign a corresponding label to an image that matches a specific pattern with an arbitrary probability through the neural network model that has learned a pattern of an image corresponding to each label.

According to a second embodiment of the present invention, the service server may learn the characteristics of images corresponding to each label to form an initial neural network model, and apply a large quantity of product image objects to the neural network model to more precisely extend the neural network model. Furthermore, when a corresponding product is not included in any group, the service server may create a new group including the corresponding product.

According to the first embodiment and the second embodiment, the service server may define labels that can be used as meta information for products in advance, such as women's bottom, skirt, one-piece dress, short sleeve, long sleeve, patterns of prints, material, color, abstract feelings (innocent, chic, vintage, or the like), generate a neural network model that has learned the characteristics of images corresponding to the label, and extract a label for an advertisement target product image by applying the neural network model to an advertiser's product image.

Meanwhile, according to a third exemplary embodiment of the present invention, the service server may apply product images to the neural network model with a hierarchical structure having a plurality of layers without further learning about labels. Furthermore, weights may be assigned to feature information of a product image according to a request of a corresponding layer, and the product images may be clustered using the processed feature information.

In this case, further analysis may be necessary to check whether the corresponding images are clustered according to which attribute of the feature value, that is, to connect the result of clustering of the images to a concept that can be actually recognized by a human being. For example, when the service server classifies products into three groups through image processing, and extracts the label A for the features of the first group, the label B for the features of the second group, and the label C for the features of the third group, it is necessary to be interpreted afterward that A, B, and C mean, for example, women's top, blouses and checkered patterns, respectively.

According to a third embodiment, the service server may assign labels for women's bottom, skirt, one-piece dress, short sleeve, long sleeve, patterns of prints, materials, colors, abstract feelings (innocent, chic, vintage, etc.) to the clustered image groups, and extract labels assigned to an image group to which an individual product image belongs as a label of the corresponding product image.

Meanwhile, the service server according to an embodiment of the present invention may express the label extracted from the product image in text, and the label in the text form may be used as tag information of the product.

In the related art, tag information of a product is subjectively directly assigned by a seller, thereby being inaccurate and inferior in reliability. The product tag subjectively given by the seller acts as a noise to reduce the efficiency of the search.

However, as in the embodiment of the present invention, when label information is extracted based on the product image, and the extracted label information is converted into text and used as tag information of the corresponding product, the tag information of the product can be extracted based on the image of the corresponding product mathematically without human intervention, thereby enhancing the reliability of tag information and improving accuracy of search.

In step 240, the service server may generate category information of the corresponding product based on the contents of the product image.

In the example of FIG. 2, steps 230 and 240 are shown as separate steps, but it is for convenience of description, and the present invention is not limited thereto. According to an embodiment of the present invention, label information and category information may be generated separately, but the label information may be used as category information and the category information may be used as label information.

For example, when labels for a product image is extracted as female, top, blouse, linen, striped, long-sleeved, blue, or office look, the service server may use the labels for female, top, and blouse as category information of a corresponding product and use the labels for linen, stripe, long-sleeved, blue, and office look as label information to explain the characteristics of products out of categories. Alternatively, the service server may index the corresponding product without distinguishing the label and the category information (Step 260).

In this case, the category information and/or the label of a product may be used as a parameter for increasing the reliability of image search.

Furthermore, the advertisement platform service according to another embodiment of the present invention may specify an advertisement target product based on the label without separately calculating image similarity. In this case, the advertisement platform according to the embodiment of the present invention may appropriate an advertisement fee to the advertiser based on the category information and/or the label.

In the case of a conventional keyword-based online advertisement platform, an advertisement fee is appropriated based on keywords. For example, advertisement fees are appropriated for keywords such as ophthalmology, LASIK, and LASEK, and when a user searches for keywords such as ophthalmology, LASIK, LASEK or the like, an advertisement for the advertiser is exposed as a search result for the keyword.

According to an embodiment of the present invention, when an advertisement fee is appropriated for a label of an image, and the corresponding label is extracted from a query, a product of an advertiser who has paid an advertisement fee may be specified as an advertisement item.

For example, when an advertiser selling whitening functional cosmetics specifies a label of "dark face" as an advertisement target, and a label extracted from a query is "dark face", the service server may specify the product of the advertiser as an advertisement item with respect to the query.

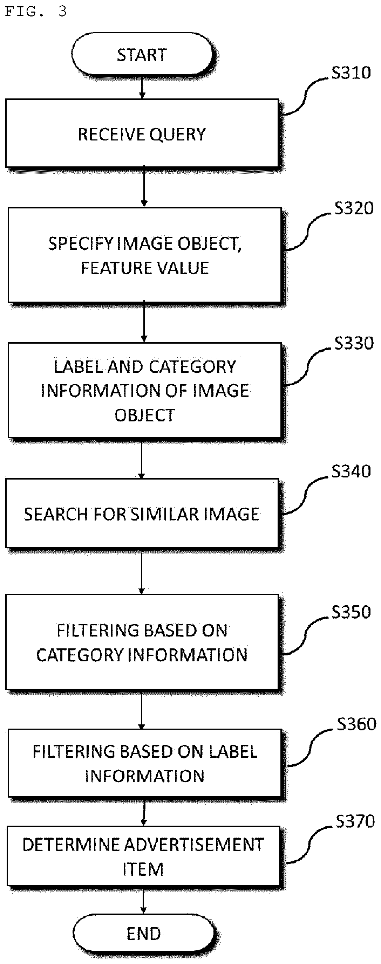

A more detailed description of determining an advertisement target item will be described later with reference to FIG. 3.

On the other hand, the service server according to an embodiment of the present invention may filter collected product description images (step 250). The reason for this is to construct a product image database except for product images that may act as noise in image search.

More specifically, the service server may determine whether to filter out a product image by comparing a label extracted from the product image with a category and/or tag information directly assigned by the advertiser.

According to an embodiment of the present invention, when a plurality of images exist for a specific product, and a label extracted from one of the images is different from a sale category of the corresponding product, the corresponding image or a specific object within the image may be filtered out from a database.

For example, a case may be considered where there are first to third product images for a product A, and the label (women's top, jacket) is extracted from the first product image, the labels (women's top, jacket) and (sunglasses, round) are extracted from the second product image, and the label (sunglasses, round) is extracted from the third product image. In this case, when the sale category of the product A is "sunglasses", the service server may construct the product image database using only the second and third product images except the first product image.

This filtering is to reduce the noise of image search. In the example above, when the product A is actually related to sunglasses and the database is constructed by including all the first to third product description images, the product A for sunglasses may be determined as advertisement item because a query image is determined to be similar to the first product image even when the query image is a jacket. Therefore, the database is constructed by filtering out product images that may reduce the accuracy of search.

Returning to the description of FIG. 1 again, in step 120, the advertisement service server 10 according to the embodiment of the present invention may receive a template for specifying an advertisement area from an advertisement medium website server 20 that provides advertisement areas. When an area where an advertisement is displayed on the website is specified through the template, the advertisement service server 10 may design an advertisement SDK for displaying an advertisement in the advertisement area and transmit advertisement SDK to the website server (step 130). Thereafter, the website server will load the advertisement SDK into its website.

Although not shown in FIG. 1, the advertisement service server 10 according to the embodiment of the present invention may collect content itself or an image included in the content at a predetermined period from the advertisement medium web site server 20. The service server may preprocess the image included in the collected data to increase a speed of the response to the query.

The example illustrated in FIG. 1 includes an embodiment in which the advertisement platform operates in the form of SDK on a website, but the present invention is not limited thereto. That is, the advertisement platform according to the embodiment of the present invention may be in the form of an application or a plug-in, an active-X, an advertisement module, or the like installed in a mobile device, and may be an extension program installed in a software or a web browsing tool installed on a desktop.

That is, an advertisement application for displaying an advertisement on an advertisement area may be installed in a user device according to an embodiment of the present invention (step 120), and the advertisement application may be configured to transmit a query for an image displayed in a state where another application is running on the user device to the advertisement service server, and display the advertisement for a product similar to the image displayed on the execution screen of the other application.

Meanwhile, when the user device 30 connects to the advertisement medium website server 20 and accesses content (step 140), the advertisement SDK or the advertisement application may be executed (step 150).

Subsequently, the user device according to an embodiment of the present invention may generate a query for inquiring advertisement information and transmit the query to the service server (Step 160).

For example, the user device may transmit a query that includes a recording log of a web browser to the service server. The recording log may include a browsing execution history of a web browser and URL information of a web page executed at a corresponding time point. Furthermore, the user device may extract an image, a video, and text data included in a URL of a web page and transmit the extracted data through a query. Furthermore, when the URL, text, an image or video data cannot be extracted, a screenshot may be extracted and transmitted through the query.

Meanwhile, although it is illustrated that a query is transmitted from a user device in the example of FIG. 1, the present invention is not limited thereto.

That is, not only the user device 30 but also the advertisement medium website server 20 may transmit a query to the service server 10. Further, the service server 10 may receive content itself or an image included in the content from the advertisement medium website server 20 in advance, and the service server may specify a query based on the received data.

In particular, the user device according to a preferred embodiment of the present invention may transmit an image displayed at the corresponding time point through a query. For example, when an image included in content received from an advertisement medium website is displayed, the user device may extract a searchable object from the displayed image and transmit the object through the query.

In this case, the user device may transmit the query on the condition that the user's search request is received. For example, when a user inquiries about an advertisement for an image being viewed, the user device may extract an object in an image for which a search is requested and transmit it through a query. Alternatively, the user device may pre-specify a searchable object in the displayed image and transmit a query for the object selected by the user.

To this end, the user device may be operable to first determine whether an object of preset categories is included in the displayed image, specify the object, and display a search or result icon on the object.

According to the above embodiment, in the case of an advertisement platform that provides only advertisements for fashion products, the advertisement platform may be operable to specify only objects for fashion items in an image and to inquire only advertisements for specified objects. Furthermore, when an image includes objects for a plurality of fashion items, the advertisement platform may be operable to specify each of the objects and inquire only an advertisement for an object selected by the user.

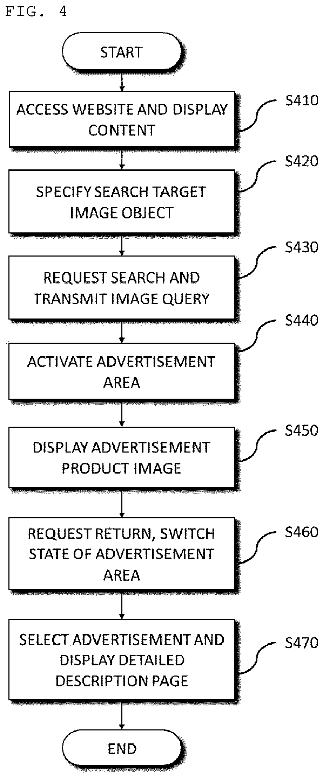

A specific user interface for identifying a search target object from an image and displaying a search icon will be described later with reference to FIGS. 4 to 6.

In step 170, the service server according to an embodiment of the present invention may search an advertisement database based on a received query.

More specifically, according to a first embodiment of the present invention, the service server may extract a label or category information from an image included in the query, and specify an advertisement item based on an image similarity with the query in products matching the label or category information among products included in the advertisement database.

For example, when there is a floral one-piece dress in the image included in the query, the service server may extract a label of a floral pattern and category information of a one-piece dress from the query. Thereafter, the service server may identify a product indexed with the label of the floral pattern and the category information of the one-piece dress in the advertisement product database, calculate similarity between the image of a corresponding product and a query image, and specify a similar product as an advertisement target item.

According to a second embodiment of the present invention, the service server may first select an advertisement target candidate based on the similarity with an image included in the query, and filter the advertisement target candidates using the label or the category information extracted from the query image. A more detailed description thereof will be described later with reference to the accompanying FIG. 3.

Furthermore, according to a third embodiment of the present invention, the service server may specify an advertisement target product only by the label and/or category information extracted from the image without performing an image search, that is, without using image similarity to specify an advertisement target product as a reference.

This method is suitable for providing advertisements for car insurance, mobile transportation cost payment service, and the like which are not sensitive to visual style.

For example, when a page which a user is looking at includes an image object in which category information may be generated by an automobile, an advertisement for an automobile insurance product may be provided according to the embodiment of the present invention. Furthermore, when the label information of the vehicle may be extracted as a car, a truck, or the like, it is possible to provide an advertisement for a car insurance product targeting a vehicle of a corresponding type. Further, when the label information of the vehicle can be extracted as a bus, it is possible to provide an advertisement for the mobile transportation cost payment service.

A more specific method of determining an advertisement item similar to a query image according to an embodiment of the present invention will be described below with reference to the accompanying FIG. 3.

FIG. 3 is a flowchart for describing a process of determining an advertisement item based on a query image according to an embodiment of the present invention.

In step 310, an advertisement service server according to an embodiment of the present invention may receive a query image and may distinguish and recognize a plurality of objects when the query image includes the objects (step 320). A search target object may be specified in the query received from a user device.

Thereafter, the service server may then process an image object specified as the search target. This is to determine similar items as advertisement items based on the contents of the query image.

To this end, the service server may extract the feature of the search target image object and index specific information of the images for the efficiency of search, and a more detailed method may be understood by referring to the aforementioned method of processing a product image.

Furthermore, the service server according to an embodiment of the present invention may extract a label and/or category information on the meaning of the search target object image by applying the machine learning technique used to construct the product image database of FIG. 2 to the processed search target object image. The label may be expressed as an abstracted value, but may be expressed in text form by interpreting the abstracted value (step 330).

In this case, the label and/or category information of the search target image object may be used as a parameter for increasing the reliability of the image search performed to determine the advertisement item.

Furthermore, although the label and category information extracted from the image object are separately illustrated in the example of FIG. 3, this is for convenience of description, and the present invention is not limited thereto. That is, according to an embodiment of the present invention, the advertisement service server may separately extract the label information and the category information from the image search target object, but may use the label information as the category information, or the category information as the label information.

For example, the advertisement service server according to an embodiment of the present invention may extract labels for women, one-piece dress, sleeveless, linen, white, and casual look from a query object image. In this case, the service server may use the labels for women and one-piece dress as category information of the query object image, and the labels for sleeveless, linen, white, and casual look as label information for describing features of the object image outside the category.

In step 340, the advertisement service server according to an embodiment of the present invention may search an advertisement product database based on the similarity of the query object image. This is to determine a product similar to the query image as an advertisement target item. For example, the service server may calculate the similarity between the feature values of the query object image and a product image and select a product whose similarity is within a preset range as an advertisement target candidate. Furthermore, the advertisement service server according to the embodiment of the present invention may process the feature values of the query image by reflecting the weights required by the plurality of layers of an artificial neural network model for machine learning configured for the product database, select at least one advertisement product group having a distance value with the query image within a predetermined range, and determine products belonging to the group as advertisement candidate items.

In addition, the service server may determine the advertisement candidate item using a label extracted from the image even when the query image and the product image in the database have low similarity in their contents. For example, when labels extracted from the query image are man, dull face, and beard, the advertisement service server according to an embodiment of the present invention may determine products, which have indexed the labels for a beard management tool, a razor, or skin care previously set to correspond to the labels, as advertisement candidate items.

Furthermore, the advertisement platform service according to another embodiment of the present invention may specify an advertisement target product based on a label extracted from a query without separately calculating image similarity (Step 370).

For example, when an advertiser operating a flower delivery service specifies a labels for Valentine's Day, flowers, and the like as advertisement targets and the label extracted from a query is Valentine's Day or Flower, the service server may specify the flower delivery service of the advertiser as an advertisement item without searching for product images similar to the query from the database.

Meanwhile, according to a preferred embodiment of the present invention, the advertisement service server may search a product database based on the similarity of the query image to determine an advertisement target candidate, and in this case, use a label and category information extracted from the image to increase the accuracy of the image search (step 350 to step 360).

For example, the advertisement service server may determine advertisement items by calculating the similarity between the feature values of a query image and a database image and excluding products of which the label and/or category information does not match the label and/or the category information of the query image among products with the similarity lager than or equal to a similarity in a predetermined range (step 370).

As another example, the advertisement service server may calculate a similarity only for products having the label and/or the category information matching the label and/or category information of the query image.

For example, when the category information of an object specified as a search target in the query image is extracted as women's top, blouse, the advertisement service server may calculate a similarity with the search target object image only for the product group having the women's top as the category information in the product database.

Furthermore, the advertisement service server may set the products of which the similarity of the query is equal to or larger than a predetermined range in the corresponding group as the advertisement candidate items, and exclude products whose subcategory information is not the blouse from the advertisement candidate items. In other words, products whose subcategory information is indexed with a blouse may be selected as an advertisement item.

In another example, when the category information of an object specified as a search target in the query image is extracted as women's top, blouse and the label thereof is extracted as long sleeves, lace, collar-neck, the advertisement service server may calculate a similarity with the search target object image only for the product group having the women's top, blouse as the category information in the product database.

In addition, the advertisement service server may determine, as an advertisement candidate item, products of which the image similarity with a search target object image is equal to or larger than a predetermined range among products belonging to a group of women's top, blouse in the product database. Thereafter, the label information of the advertisement candidate items and the label information of the search object image may be compared to each other to exclude products that do not match in at least a certain number from the advertisement candidate items.

In other words, the advertisement service server may set a product whose image similarity with the search target object image is equal to or larger than the predetermined range as the advertisement candidate items among the products belonging to the group of women's top, blouse and determine products, in which the label information of the advertisement candidate item is long-sleeve, lace, collar-neck, as an advertisement item.

Referring back to the description of FIG. 1, when an advertisement target item is determined based on the similarity with the search target object image in step 170 of FIG. 1, the advertisement service server may transmit information about the advertisement target item to the user device in response to the query (step 190).

Thereafter, the user device according to the embodiment of the present invention may display an advertisement in a pre-specified advertisement area (step 195). A more specific example of displaying an advertisement according to an embodiment of the present invention will be described below with reference to accompanying FIGS. 4 to 6.

FIG. 4 is a flowchart for describing a method of displaying an advertisement in a user device according to an embodiment of the present invention.

FIG. 4 illustrates a process in which an advertisement application according to an embodiment of the present invention performs a function of displaying an advertisement in cooperation with a web browser application, but the present invention is not limited thereto. The advertisement application according to the embodiment of the present invention may operate based on another application such as a web browser or may be executed independently.

In step 410, a user device according to the present embodiment may access an advertisement medium website and display content provided from the website.

In this case, when the content displayed on the user device includes an image, the user device according to the embodiment of the present invention may specify a search target image object in the displayed image and express the specified object in a state of being capable of receiving a user input (step 420). Meanwhile, through the control of the service server 10, the advertisement medium website server 20 may specify a search target image object to change the display of the user device or may operate such that an advertisement SDK specifies the search target image object.

For example, when an advertisement platform according to an embodiment of the present invention provides an advertisement for a fashion product, the advertisement application according to an embodiment of the present invention may specify at least one or more of fashion items such as clothes, glasses, bags, and the like in an image displayed on the user device and distinguish and mark individual objects in the entire image. Alternatively, although the top, bottom, glasses, and bag are all included in the image, only the top and bag that are searchable may be distinguished and displayed in the image in consideration of the shapes and sizes of the objects.

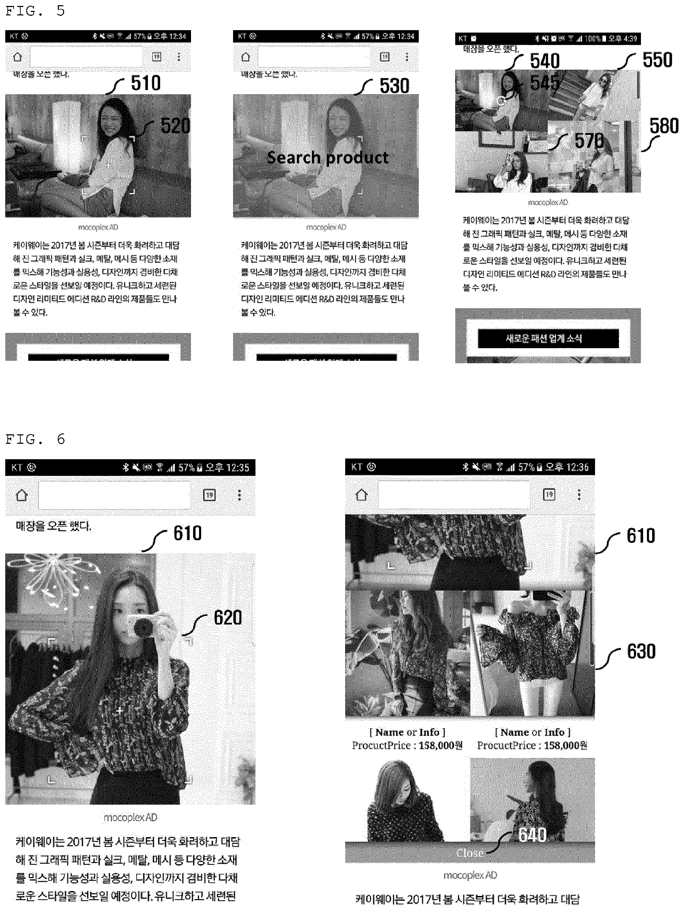

Specific example of a user interface for specifying a search target image object in an image displayed on a user device will be described below with reference to FIGS. 5 and 6.

Thereafter, the user device may transmit a query when a user's search request for a specified image object is received (step 430). In the previous example, when the user selects a bag, the user device will transmit a query for inquiring an advertisement for an item similar to that bag. In this case, the user device may transmit the query together with the displayed image.

Further, the user device may activate a previously specified advertisement area when a user's selection input is received, that is, when the user requests an advertisement. The activation of the advertisement area means that a partial area of a page displayed on the user device are switched to display an advertisement.

The advertisement area according to an embodiment of the present invention is appropriately activated on the same layer as the previously displayed content, but the present invention is not limited thereto. That is, the advertisement area may be displayed by being overlaid as an upper layer of the content or may be displayed by calling a page separate from the content.

Thereafter, the user device may display an advertisement in the activated advertisement area. In the example of FIG. 4, step 440 and step 450 are distinguished as separate steps, but this is for convenience of description and the present invention is not limited thereto. That is, when the user device receives the advertisement request from the user, the user device may display the advertisement information received from the service server in the predetermined advertisement area.

According to a preferred embodiment of the present invention, the advertisement may be configured to include an object image that is a search object together with images for a plurality of advertisement items (step 450). In this case, in order to include the plurality of advertisement item images in the limited area, the advertisement area may be scrolled to display the advertisement item image according to a scroll gesture of the user.

Furthermore, when the user selects one advertisement item, the user device may display a detailed description page for the selected advertisement item (step 470). However, when the user requests to return, the state of the advertisement area may be switched from an activated state to a deactivated state. That is, the advertisement area for displaying the advertisement may be removed (step 460).

FIG. 5 illustrates an example of a user interface for displaying an advertisement area according to an embodiment of the invention.

For example, when the content as shown in FIG. 5A is displayed on a user device, an advertisement application according to an embodiment of the present invention may specify an object 520 that is searchable in an image 510 included in the content, and display 520 with an icon capable of receiving a user input 520 distinguishably.

In this case, when the user selects 520, as shown in FIG. 5B, a query inquiring an advertisement may be transmitted together with the image 510 and/or the image object 520 while activating an area corresponding to the image 510 as the advertisement area 530.

Furthermore, the user device according to the embodiment of the present invention may display advertisement items 550, 560, and 570 similar to the image object 520 along with a query image 540 in the advertisement area 530 as shown in FIG. 5C.

Furthermore, according to another embodiment of the present invention, even when there is no user input for 510, the user device may transmit a query and activate the advertisement area 530. That is, the query may be transmitted and an advertisement area may be activated based on the displayed image even without an explicit search request of the user. In this case, when the user inputs a scroll gesture with respect to the advertisement area, only an image of an advertisement item within the advertisement area may be scrolled and displayed in a state in which an area other than the advertisement area is fixed.

FIG. 6 illustrates another example of a user interface for displaying an advertisement area according to an embodiment of the present invention.

According to an embodiment of the present invention, when content as shown in FIG. 6A is displayed on a user device, the advertisement application may specify an object 620 that is searchable in an image 610 included in the content, and display the object 620 with an icon capable of receiving a user input 620 distinguishably.

In this case, when the user selects 620, an area in the lower portion of the image 610 may be activated as the advertisement area 630 as shown in FIG. 6B. In this case, the advertisement area may be the same size as the image 610, and the user device may scroll the entire page such that the advertisement area is displayed at the top of the page.

Furthermore, according to another embodiment of the present invention, even when there is no user input for 610, the user device may transmit a query for 620 and activate the advertisement area 630. That is, the query may be transmitted and an advertisement area may be activated based on the displayed image even without an explicit search request of the user.

In this case, when the user selects a return icon 640, the advertisement area 630 may be switched to a deactivated state and disappear from the page. Further, when the user selects any advertisement item included in the advertisement area, a detailed product description page may be generated.

The embodiments of the present invention disclosed in the specification and the drawings are only specific examples to easily explain the technical contents of the present invention and aid the understanding of the present invention, and are not intended to limit the scope of the present invention. It is apparent to those skilled in the art that other modifications based on the technical idea of the present invention can be carried out in addition to the embodiments disclosed herein.

## Claims

1. A method of displaying an image-based customized advertisement on a user device, comprising:
specifying and displaying a searchable object when there is the searchable object among images included in a displayed page;
when a user's search request for a specified object is received, transmitting an image query including the object to a service server and activating a predetermined advertisement area; and
when at least one piece of advertisement information is received from the service server, displaying an advertisement image included in the advertisement information in the advertisement area.

2. A method of displaying an image-based customized advertisement on a user device, comprising:
when a user's search request for an image included in the displayed page is received, transmitting an image query including the object to a service server and activating a predetermined advertisement area; and
when at least one piece of advertisement information is received from the service server, displaying an advertisement image included in the advertisement information in the advertisement area.

3. A method of displaying an image-based customized advertisement on a user device, comprising:
transmitting an image query included in the displayed page to a service server and activating a predetermined advertisement area; and
when at least one piece of advertisement information is received from the service server, displaying an advertisement image included in the advertisement information in the advertisement area.

4. The method according to any one of claims 1 to 3, wherein, when a user scroll gesture for the advertisement area is received, scrolling and displaying the advertisement image according to the scroll gesture in the advertisement area without changing an area other than the advertisement area.

5. The method of claim 4, wherein the advertisement area is a display area of an image in which the searchable object exists.

6. The method of claim 5,
wherein the advertisement area has the same size as the image in which the searchable object exists, and is located at a lower end of the display area of the image in which the object exists, and
wherein the activating of the advertisement area includes scrolling and displaying the page such that the advertisement area is positioned at the top end of the displayed page.

7. An advertisement platform system for providing image-based customized advertisement, comprising:
an advertisement service server configured to generate a database of an advertisement target product of an advertiser, search the database when a query for inquiring an advertisement is received, and specify an advertisement item;
an advertisement medium website server configured to provide content including an advertisement area to a user device; and
a user device configured to access the advertisement medium website server, display the content, provide a query including an image included in the content to the advertisement service server, and display an advertisement for the advertisement item in the advertisement area included in the content when information about the advertisement item is received from the advertisement service server.

8. An advertisement platform system for providing image-based customized advertisement, comprising:
an advertisement service server configured to generate a database of an advertisement target product of an advertiser, search the database when a query for inquiring an advertisement is received, and specify an advertisement item; and
an advertisement medium website server configured to provide content including an advertisement area to a user device, provide the query including an image included in the content to the advertisement service server, and provide in the advertisement area included in the content an advertisement including an advertisement for the advertisement item to the user device when information about the advertisement item is received from the advertisement service server.

9. An advertisement platform system for providing image-based customized advertisement, comprising:
an advertisement service server configured to generate a database of an advertisement target product of an advertiser, search the database when a query for inquiring about an advertisement is received, and specify an advertisement item;
an advertisement medium website server configured to provide content including an advertisement area to a user device; and
an advertisement agent service server configured to access the advertisement medium website server, provide the query including an image included in the content to the advertisement service server, and insert information about the advertisement item into the advertisement area and transmit the information about the advertisement item to the website server when information about the advertisement item is received from the advertisement service server.

10. A method of providing an image-based customized advertisement to a service server comprising:
a step A of generating at least one or more of label information describing a feature of a product and category information of the product based on at least one of a product image included in advertisement target product information and the advertisement target product information, and generating a database by indexing at least one or more of the label information and category information onto the product image;
a step B of specifying a search target image when a query about an image displayed on a user device is received and generating label information and category information describing a feature of the specified search target image;
a step C of searching for a candidate image having a similarity with the search target image in a preset range in the database, perform filtering using at least one or more of the category information and the label information of the search target image, and determining an advertisement item; and
a step D of providing information about the advertisement item to the user device.

11. The method of claim 10, wherein the step C includes searching for, in the database, a candidate image having a preset similarity with the search target image among images having category information including higher category information of the search target image; and
filtering out the candidate image when the category information of the candidate image does not include subcategory information of the search target image.

12. The method of claim 10, wherein the step C includes searching for, in the database, a candidate image having a preset similarity with the search target image among images having category information matching category information of the search target image; and
identifying a similarity between label information of the candidate image and label information of the search target image and filtering out a candidate image of which a similarity is lower than a predetermined range.

13. A method of providing an image-based customized advertisement to a service server comprising:
a step A of generating label information describing a feature of a product based on at least one of a product image included in advertisement target product information and the advertisement target product information, and generating a database by indexing the label information onto the product image;
a step B of specifying a search target image when a query about an image displayed on a user device is received and generating query label information describing a feature of the specified search target image; and
a step C of determining an advertisement item based on the query label information in the database; and
a step D of providing information about the advertisement item to the user device.
